# EUROPEAN PATENT APPLICATION

(11) **EP 2 400 378 A1**
(43) Date of publication of application: **28.12.2011**
(21) Application number: 09840361.1
(22) Date of filing: 23.02.2009
(51) Int. Cl.: G06F 3/048, G06F 3/041

(54) **INFORMATION PROCESSING DEVICE, DISPLAY CONTROL METHOD AND DISPLAY CONTROL PROGRAM**

(71) Applicant: Fujitsu Limited, Kawasaki-shi, Kanagawa 211-8588 (JP)
(72) Inventor: KAKIE, Michito, Kawasaki-shi Kanagawa 211-8588 (JP)
(74) Representative: Holz, Ulrike
(86) International application number: PCT/JP2009/053145
(87) International publication number: WO 2010/095255

(57) **Abstract**

To improve operability for window operations.

An information processing apparatus (1) includes a display (1a), detection unit (1b), and control unit (1c). The display unit (1a) displays one or more windows. The detection unit (1b) detects touch operations made on the display unit (1a). The control unit (1c) recognizes a pattern represented by the track of the touch operations detected by the detection unit (1b), and performs display control (for example, maximization, minimization, close, or scroll) on the windows displayed on the display unit (1a) according to the pattern.

## Description

### Technical Field

The present invention is related to an information processing apparatus, display control method, and display control program.

### Background Art

A window system has been widely employed in information processing apparatuses provided with a GUI (Graphical User Interface). The window system enables one or more windows to be displayed on an operation screen. The window system also enables a user to perform a variety of operations, such as inputting characters and drawing in displayed windows, and a variety of window operations, such as positioning, resizing, maximizing, minimizing (iconifying), closing, and scrolling of the displayed windows.

Windows are operated with a pointing device such as a mouse. For example, the user moves a window by dragging a title bar provided at the top of the window with a mouse. The user also maximizes, minimizes, or closes a window by clicking on a corresponding button provided at the end of the title bar with the mouse. In this connection, it is possible to equip an information processing apparatus with an input device that is exclusively used for window operations, in addition to such a pointing device (for example, refer to Patent Literature 1).

In addition, a device (for example, a touch panel) which is capable of detecting touch operations on an operation screen may be employed to enable detection of a position on an operation screen. By using such a device, a user is able to directly specify a position on an operation screen with his/her finger or a pen. For information processing apparatuses which are capable of accepting inputs using a pen, there has been considered a handwriting input method in which a user inputs a predetermined memo command with a pen to open a memo area and then touches a predetermined box with the pen to close the memo area (for example, refer to Patent Literature 2).
Patent Literature 1: Japanese Laid-open Patent Publication No. 2002-259001
Patent Literature 2: Japanese Laid-open Patent Publication No. 07-141092

### Disclosure of Invention

### Problems that the Invention is to Solve

Information processing apparatuses which are capable of detecting touch operations made on an operation screen may be designed so as to allow currently displayed windows to be operated through touch operations. However, there is a problem that a title bar or button may be small relative to an operation screen, so that a user may have some difficulty in touching it correctly. This problem is hard to be solved particularly for devices like portable information terminal devices because these have a limited size for an operation screen.

This invention is made in view of the foregoing and intends to provide an information processing apparatus, display control method, and display control program which provide improved operability for window operations.

### Means for Solving the Problems

To solve the above problems, there is provided an information processing apparatus which includes a display unit, a detection unit, and a control unit. The display unit displays one or more windows. The detection unit detects touch operations made on the display unit. The control unit recognizes a pattern represented by the track of the touch operations detected by the detection unit, and performs display control on the windows displayed on the display unit according to the pattern.

Further, to solve the above problems, there is provided a display control method for an information processing apparatus with a display unit. According to this display control method, one or more windows are displayed on the display unit. Touch operations made on the display unit are detected. A pattern represented by the track of the touch operations is recognized, and display control is performed on the windows displayed on the display unit according to the pattern.

Still further, to solve the above problems, there is provided a display control program to be executed by a computer connected to a display unit. The computer executing the display control program displays one or more windows on the display unit, detects touch operations made on the display unit, recognizes a pattern represented by the track of the touch operations, and performs display control on the windows displayed on the display unit according to the pattern.

### Advantages of the Invention

The above information processing apparatus, display control method, and display control program provide improved operability for window operations.

The above and other objects, features and advantages of the present invention will become apparent from the following description when taken in conjunction with the accompanying drawings which illustrate preferred embodiments of the present invention by way of example.

### Brief Description of the Drawings

FIG. 1 illustrates an example information processing apparatus according to one embodiment;
FIG. 2 illustrates an appearance of a portable information terminal device;
FIG. 3 is a block diagram illustrating a hardware configuration of the portable information terminal device;
FIG. 4 is a functional block diagram of the portable information terminal device;
FIG. 5 illustrates an example data structure of a window management table;
FIG. 6 illustrates an example data structure of a pattern definition table;
FIG. 7 is a flowchart of window display control;
FIG. 8 illustrates a first example of pattern recognition;
FIG. 9 illustrates a first example of window operations;
FIG. 10 illustrates a second example of pattern recognition;
FIG. 11 illustrates a second example of window operations;
FIG. 12 illustrates a third example of pattern recognition;
FIG. 13 illustrates a third example of window operations;
FIG. 14 illustrates a fourth example of pattern recognition; and
FIG. 15 illustrates a fourth example of window operations.

### Best Mode for Carrying out the Invention

A preferred embodiment of this invention will be described with reference to the accompanying drawings.

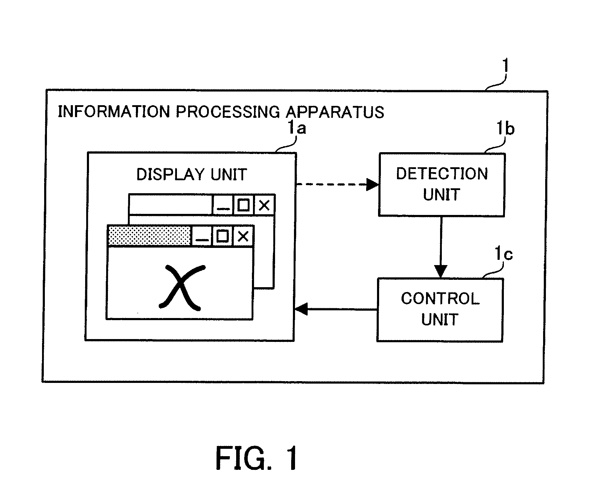

FIG. 1 illustrates an example information processing apparatus according to this embodiment. The information processing apparatus 1 of FIG. 1 is capable of displaying windows. As the information processing apparatus 1, a variety of devices, such as laptop computers, UMPCs (Ultra Mobile Personal Computer), PDAs (Personal Data Assistance), and portable telephones, are considered. The information processing apparatus 1 includes a display unit 1a, a detection unit 1b, and a control unit 1c.

The display unit 1a displays an operation screen with one or more windows. As the display unit 1a, a liquid crystal display or organic EL (Electroluminescence) display may be employed. A user is able to operate windows displayed on the display unit 1a and perform various operations.

The detection unit 1b detects touch operations made on an operation screen on the display unit 1a. A touch panel may be employed as the detection unit 1b. The detection unit 1b notifies the control unit 1c of a touch position on the operation screen. This notification may be made periodically (for example, every 50 ms) or occasionally. The detection unit 1b may allow a user's finger or a stylus pen to make touch operations.

The control unit 1c recognizes a pattern represented by the track of touch operations detected by the detection unit 1b. For example, it is assumed that the features of a shape of "×" have been registered. When a track matching the features is recognized, it is determined that "×" has been drawn. The control unit 1c is capable of distinguishing among a plurality of different patterns. To this end, a table which associates a pattern and the features of its shape with each other may be prepared and stored. Patterns that are to be recognized may be fixed or arbitrarily set by a user.

The control unit 1c performs display control on a window displayed on the display unit 1a according to a recognized pattern. The display control includes maximizing, minimizing, closing, and scrolling a window. For example, when a pattern of "×" is recognized, a window is closed. Such display control may be performed on all or a part of windows displayed on the display unit 1a. In the latter case, for example, it is considered that the display control is performed only on windows (active windows) that are currently operated.

With such an information processing apparatus 1, the display unit 1a displays one or more windows. The detection unit 1b detects touch operations made on the display unit 1a. The control unit 1c recognizes a pattern represented by the track of the detected touch operations, and performs display control on the windows displayed on the display unit 1a according to the pattern.

This realizes improved operability for window operations to be performed by users. For example, it becomes possible that a user performs window operations such as maximizing, minimizing, closing, and scrolling a window, without correctly touching a title bar or button which is small relative to an operation screen. This is particularly beneficial for portable information terminal devices with a limited size for an operation screen.

The following describes in more detail the case where the above display control method is implemented in a portable information terminal device with a touch panel. It is noted that this display control method may be implemented in portable information terminal devices provided with a detection unit other than a touch panel or other types of information processing apparatuses.

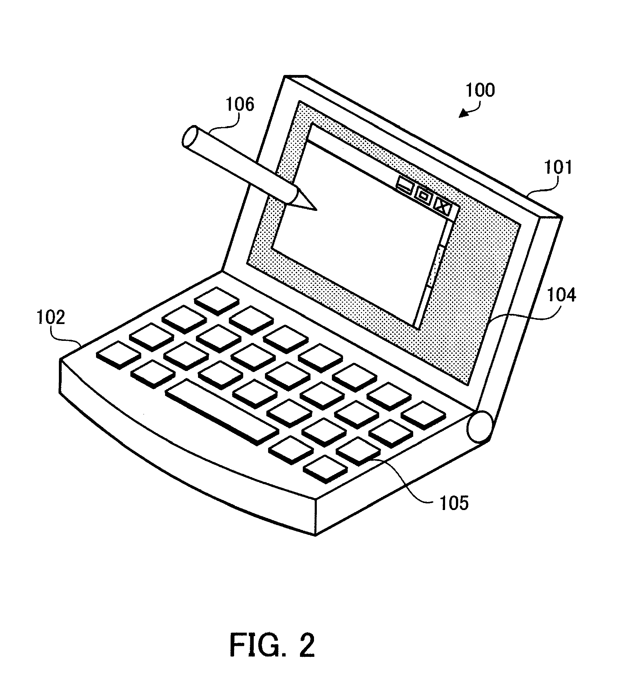

FIG. 2 illustrates an appearance of a portable information terminal device. The portable information terminal device 100 according to this embodiment is a small-sized information terminal device called UMPC, which is easy to carry.

The portable information terminal device 100 has cases 101 and 102. The case 101 is openable and closable with respect to the case 102. FIG. 2 illustrates a state where the case 101 is open. The case 101 has a display 103 (not illustrated in FIG. 2) and a touch panel 104. The case 102 has a keyboard 105.

The display 103 is mounted under the touch panel 104, and displays an operation screen. The operation screen, which is displayed on the display 103, is viewable though the touch panel 104 from the front side of the case 101. A user is able to make touch operations on the touch panel 104 while viewing the operation screen displayed on the display 103. In this connection, the display 103 may be mounted over the touch panel 104, depending on the type of the touch panel 104.

The touch panel 104 detects touch operations. The user is able to touch the touch panel 104 with a stylus pen 106 or his/her finger. The touch panel 104 detects the touch position of the tip of the stylus pen 106 or his/her finger. For detecting touch operations, there are a variety of methods: for instance, a method using a resistive film, a method forming electromagnetic field on a surface, and a method using infrared rays. In addition, a touch position may be detected with non-contact technology.

The keyboard 105 has an input device provided with various keys including character keys, symbol keys, numerical keys, and function keys. When the user presses any of these keys, the keyboard 105 outputs an electrical signal according to the pressed key. The user is able to input sentences or call a function by operating these keys.

In this connection, another input/output device may be provided in the portable information terminal device 100. For example, a speaker and microphone may be provided. In addition, another input/output device may be connected to the portable information terminal device 100. For example, a mouse may be connected.

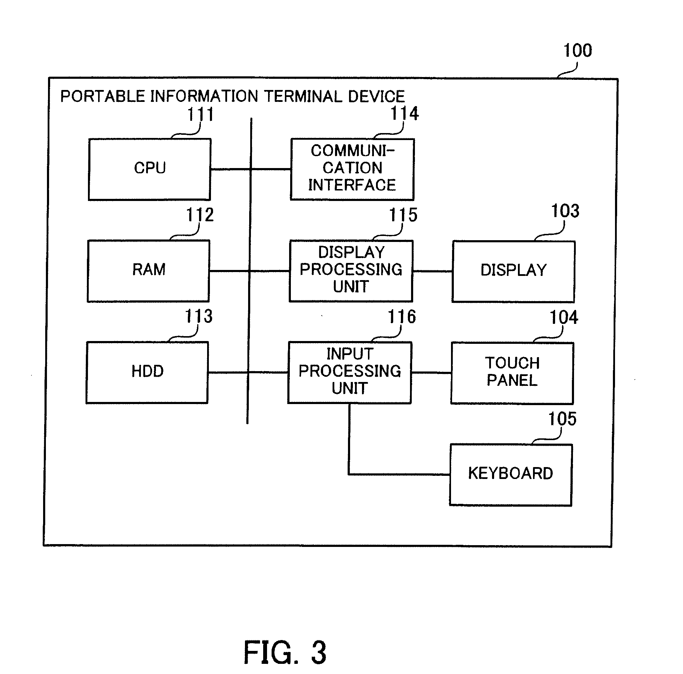

FIG. 3 is a block diagram illustrating a hardware configuration of a portable information terminal device. The portable information terminal device 100 has a CPU (Central Processing Unit) 111, a RAM (Random Access Memory) 112, HDD (Hard Disk Drive) 113, a communication interface 114, a display processing unit 115, and an input processing unit 116. These units are provided in the case 101 or 102.

The CPU 111 controls the entire operation of the portable information terminal device 100. At this time, the CPU 111 reads programs from the HDD 113, and places and executes them in the RAM 112. More specifically, the CPU 111 starts to execute an OS (Operating System) program and a window display control program when the portable information terminal device 100 boots up. After that, the CPU 111 starts or ends application programs where appropriate. In this connection, a plurality of CPUs may be installed in the portable information terminal device 100 so that a program is executed in a distributed manner.

The RAM 112 temporarily stores at least part of programs to be executed by the CPU 111 or various data needed for CPU processing. Such reading and writing of programs or data to the RAM 112 is realized by the CPU 111. Instead of the RAM 112, another type of memory may be provided.

The HDD 113 stores programs to be executed by the CPU 111 and various data for the CPU processing. Programs stored in the HDD 113 include the OS program, window display control program, and application programs. The data to be stored includes setting data for window display control. Instead of the HDD 113, a non-volatile memory device such as SSD (Solid Sate Drive) may be employed.

The communication interface 114 performs data communication with another information processing apparatus over a network. That is, the communication interface 114 encodes and modulates transmit data and outputs the resultant over the network under the control of the CPU 111. In addition, the communication interface 114 demodulates and decodes data received over the network. In this connection, it is considered that the communication interface 114 accesses a wired or wireless network.

The display processing unit 115 is connected to the display 103. Under the control of the CPU 111, the display processing unit 115 performs image processing on an operation screen displayed on the display 103, and continuously supplies the display 103 with an image signal. The operation screen may have one or more windows.

The input processing unit 116 is connected to the touch panel 104 and keyboard 105. The input processing unit 116 detects an input signal indicating touch start (Down event), touch end (Up event), or the coordinate of a current touch position, which is supplied from the touch panel 104. In addition, the input processing unit 116 detects an input signal indicating a pressed key, which is supplied from the keyboard 105. The detected input signal is supplied to the CPU 111.

The display 103 and touch panel 104 correspond to the display unit 1a and detection unit 1b of FIG. 1, respectively. The CPU 111 and RAM 112 correspond to the control unit 1c of FIG. 1.

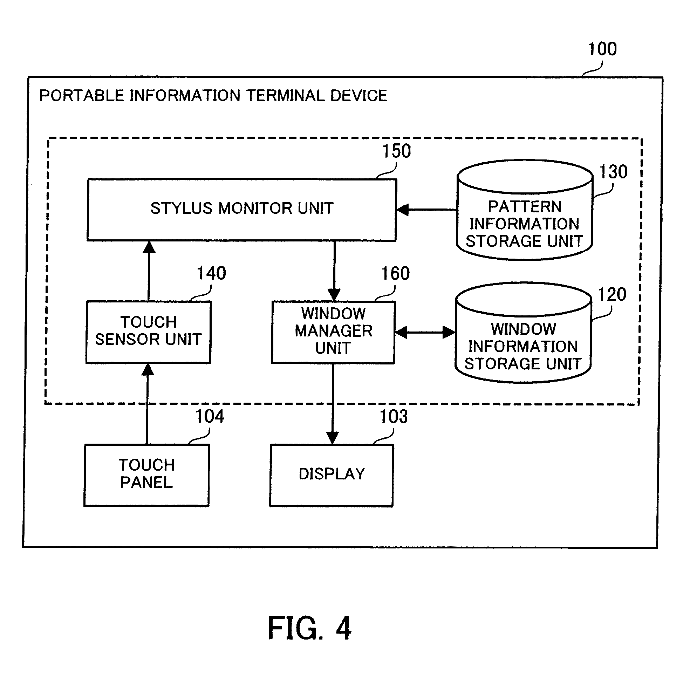

FIG. 4 is a functional block diagram of a portable information terminal device. The portable information terminal device 100 has a window information storage unit 120, a pattern information storage unit 130, a touch sensor unit 140, a stylus monitor unit 150, and a window manager unit 160. The functions of these modules are realized by the CPU 111 placing and executing programs in the RAM 112. Alternatively, part or all of these may be implemented by using hardware components.

The window information storage unit 120 stores window management information indicating the states of each open window. The states indicated by the window management information include a display state and use state of a window. The display state includes a maximized state (displayed so as to cover the entire display area), a minimized state (displayed as an icon), and a normal display state (state other than the maximized and minimized states), for example. The use state includes an active state (a state where a window is currently operated by a user) and inactive state (a state where a window is not currently operated by a user), for example.

The pattern information storage unit 130 stores pattern information defining commands for window operations. A command is defined as a pattern to be drawn through touch operations. For example, the pattern information includes information indicating a type of window operation and feature information which is used for recognizing a pattern from the track of touch operations. For example, the types of window operation include maximizing, minimizing, closing, and scrolling a window. In this connection, a user may be allowed to update the pattern information.

The touch sensor unit 140 acquires an input signal indicating touch operations from the touch panel 104 via the input processing unit 116. The touch sensor unit 140 detects a drag operation on the basis of UP and DOWN events. While the drag operation is made, the touch sensor unit 140 notifies the stylus monitor unit 150 of a coordinate indicating the current touch position continuously (for example, every 50 ms). Alternatively, the touch sensor unit 140 may make a notification of how much the coordinate has changed from the last notification.

The touch sensor unit 140 may detect a touch operation made for window operations on the entire or partial area of the touch panel 104. The case of the partial area is a case where the touch sensor unit 140 detects touch operations made only on the front-most window or active window, for example. That is, touch operations made in an area where a predetermined window is displayed are detected as touch operations for window operations. In this case, a part of a track is allowed to go beyond the window.

The stylus monitor unit 150 continuously acquires information on a current touch position from the touch sensor unit 140, and temporarily stores the track of the touch operations. For example, the stylus monitor unit 150 retains data of drag operations made in a last predetermined time period or a predetermined number of past coordinates of the drag operations. Then, the stylus monitor unit 150 identifies a command indicated by the track of the touch operations with reference to the pattern information stored in the pattern information storage unit 130. For example, the stylus monitor unit 150 compares the track of the touch operations with the feature information of each command, and selects the best matched command. Then, the stylus monitor unit 150 gives the window manager unit 160 a window operation command to perform window operations according to the identified command.

The window manager unit 160 controls the display states of windows. In response to a window operation command from the stylus monitor unit 150, the window manager unit 160 identifies a currently active window on the basis of the window information stored in the window information storage unit 120. Then, the window manager unit 160 operates the active window, and displays the resultant operation screen on the display 103 via the display processing unit 115. At the same time, the window manager unit 160 updates the window information.

Not an active window but a front-most or a bottommost window may be designated as a window to be operated. In addition, a window to be operated may be selected according to a command or to the position of a touch operation. In this case, the stylus monitor unit 150 gives the window manager unit 160 information on which window to operate.

The functions of the above modules may be realized by a plurality of different programs. For example, the functions of the touch sensor unit 140 may be realized by a driver program, the functions of the pattern information storage unit 130 and stylus monitor unit 150 may be realized by an application program, and the functions of the window information storage unit 120 and window manager unit 160 may be realized by an OS program.

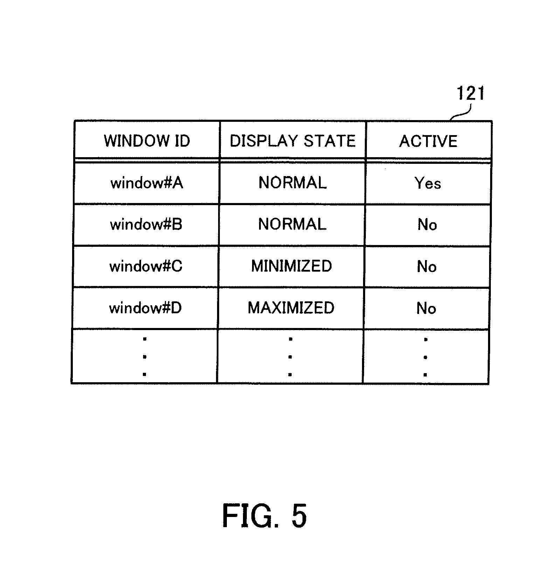

FIG. 5 illustrates an example data structure of a window management table. The window management table 121 is stored in the window information storage unit 120, and is consulted and updated by the window manager unit 160. The window management table 121 has fields for Window ID (IDentifier), Display State, and Active. Data in fields arranged in a horizontal direction is associated with each other.

The Window ID field contains a character string identifying a window. A window ID is automatically given to a window when the window is open. The Display State field contains a character string indicating the current display state of a window. For example, "maximized", "minimized", or "normal" is set. The Active field contains a flag indicating whether a window is currently active or inactive. A flag of "Yes" indicates an active window, and a flag of "No" indicates an inactive window. The number of active windows may be limited to one, or a plurality of windows may be allowed to be active at the same time.

For example, it is assumed that the window management table 121 has a record with a window ID of "window#A", a display state of "normal", and an active flag of "Yes". This means that an active window is currently displayed in a normal display state on an operation screen. It is also assumed that the window management table 121 has a record with a window ID of "window#C", a display state of "minimized", and an active flag of "No". This means that another inactive window is currently displayed as an icon on the operation screen.

When a window is open, the window manager unit 160 registers information on the window in the window management table 121. Normally, a newly opened window has a display state of "normal" and is active. Then, in response to user's input operations, the window changes its display state and/or changes its state between active and inactive. In addition, when a window is closed, the window manager unit 160 deletes the information on the closed window from the window management table 121. Instead of deleting the information, a display state of "closed" may be set.

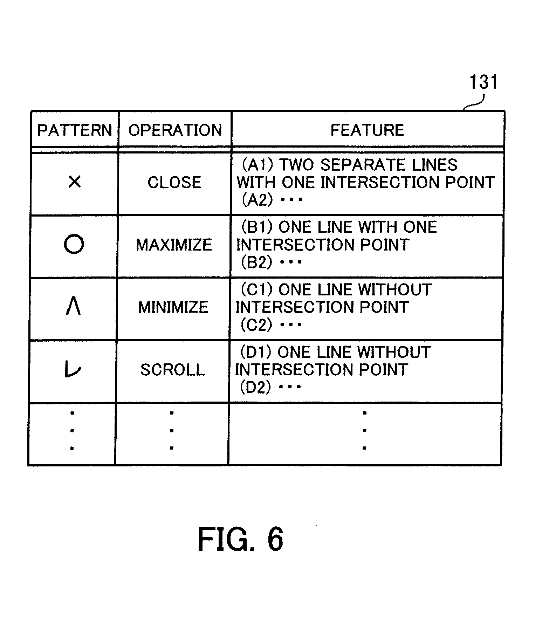

FIG. 6 illustrates an example data structure of a pattern definition table. The pattern definition table 131 is stored in the pattern information storage unit 130 and is consulted by the stylus monitor unit 150. The pattern definition table 131 has fields for Pattern, Operation, and Feature. Data in fields arranged in a horizontal direction is associated with each other.

The Pattern field contains a symbol identifying a command. For example, the symbol roughly represents the shape of a pattern. The Operation field contains a character string indicating a type of window operation. For example, "maximize", "minimize", "close", or "scroll" may be set. The Feature field contains feature information to be used for recognizing a pattern that is drawn through touch operations. The feature information may define a plurality of feature items for one pattern. The features of a pattern may be represented as an equation which defines relationship among a plurality of coordinates in order for the stylus monitor unit 150 to easily recognize.

For example, it is assumed that the pattern definition table 131 has a record with a pattern of "×" and an operation of "close". This means that when a pattern drawn through touch operations is recognized as "×", an active window is closed. It is also assumed that the pattern definition table 131 has a record with a pattern of "o" and an operation of "maximize". This means that when a pattern drawn through touch operations is recognized as "o", an active window is maximized.

The stylus monitor unit 150 compares the track of drag operations made in a last predetermined time period or the track of a predetermined number of past positions of the drag operations with the feature information of each pattern, and determines whether a pattern with matched features has been registered. In the case where a plurality of feature items are registered for one pattern, the stylus monitor unit 150 searches for a pattern whose feature items are all satisfied by the track. The user is able to change a correspondence between a pattern and a type of window operation by updating the pattern definition table 131. The user is also able to register a new pattern.

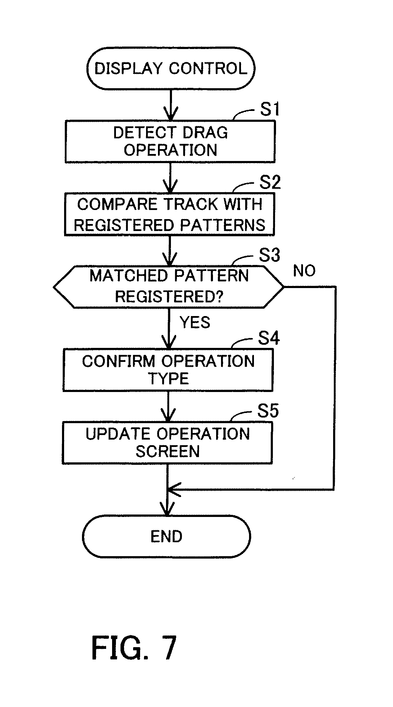

FIG. 7 is a flowchart of window display control. The process illustrated in FIG. 7 is repeated by the portable information terminal device 100. This process of window display control will be described step by step.

At step S1, the touch sensor unit 140 detects a drag operation made on the touch panel 104 on the basis of an input signal received from the touch panel 104. Then, the touch sensor unit 140 notifies the stylus monitor unit 150 of a change in the touch position of the drag operation.

At step S2, the stylus monitor unit 150 consults the pattern definition table 131 stored in the pattern information storage unit 130 to compare the track of the drag operation with the patterns registered as commands. That is to say, the stylus monitor unit 150 determines whether the track of the drag operation matches the features of any pattern.

At step S3, the stylus monitor unit 150 determines whether the track of the drag operation matches any registered pattern or not, as a result of the determination of step S2. If a matched pattern has been registered, the process proceeds to step S4. If no matched pattern has been registered, the process is terminated.

At step S4, the stylus monitor unit 150 confirms the type of window operation corresponding to the pattern found at step S2. Then, the stylus monitor unit 150 requests the window manager unit 160 to operate an active window.

At step S5, the window manager unit 160 consults the window management table 121 stored in the window information storage unit 120 to identify an active window. Then, the window manager unit 160 operates the identified window as specified by the stylus monitor unit 150, and updates the operation screen displayed on the display 103. At the same time, the window manager unit 160 updates the display state of the window registered in the window management table 121.

As described above, the portable information terminal device 100 detects touch operations made on the touch panel 104 and recognizes a pattern represented by the track of the touch operations. Then, the portable information terminal device 100 operates an active window according to the recognized registered pattern to change the display state of the window, and updates the operation screen displayed on the display 103.

The following describes specific examples on how to recognize a drawn pattern from the track of touch operations and on how to perform window operations. The first example is that a window is closed when a pattern of "×" is detected. The second example is that a window is maximized when a pattern of "o" is detected. The third example is that a window is minimized when a pattern of "^" is detected. And the fourth example is that a window is scrolled when a pattern of " 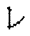 " is detected.

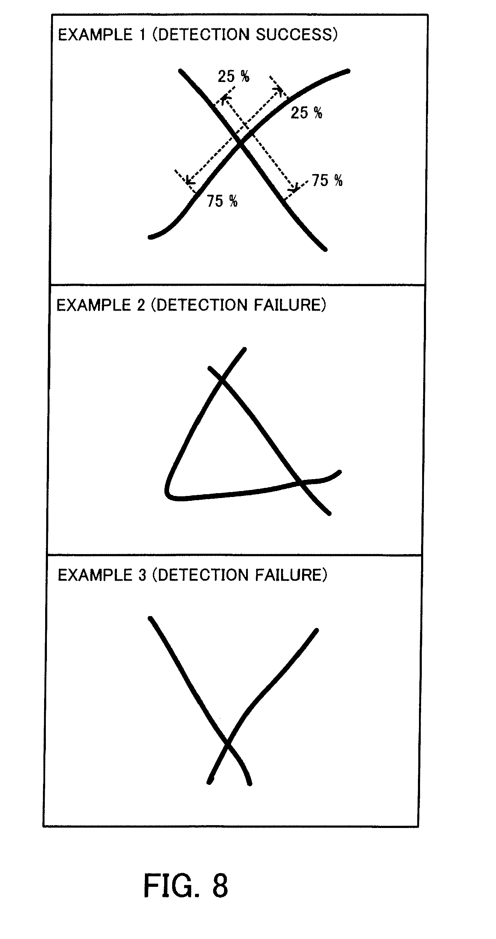

FIG. 8 illustrates the first example of pattern recognition. FIG. 8 depicts how to recognize a pattern of "×" from the track of touch operations. To recognize the pattern of "×", the following feature items A1 and A2 are registered in the pattern definition table 131, for example.
A1: Two separate lines which are crossed once.
A2: The intersection point of two lines exists within "25% of the total length of each line from the central point of the line".

The track of touch operations in example 1 satisfies both the feature items A1 and A2. Therefore, it is recognized that a pattern of "×" has been drawn in the example 1. On the other hand, referring to the track of touch operations in example 2, two separate lines are crossed twice, which does not satisfy the feature item A1. In addition, referring to the track of touch operations in example 3, the intersection point does not exist within "25% of the total length of each line from the central point of the line", which does not satisfy the feature item A2. Therefore, it is not recognized that a pattern of "×" has been drawn in the examples 2 and 3.

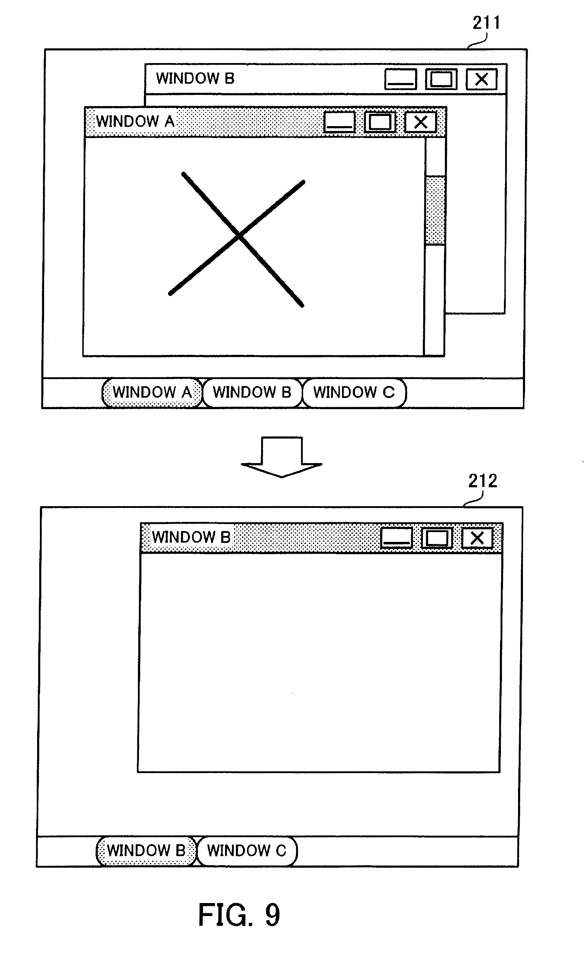

FIG. 9 illustrates a first example of window operations. The operation screens 211 and 212 of FIG. 9 are example operation screens that are displayed on the display 103. In the operation screen 211, windows A, B, and C are open. Out of these, the windows A and B are displayed in a normal state, and the window C is displayed as an icon in a taskbar. The window A is the front-most active window.

When touch operations for drawing a pattern of "×" are made on the display area of the operation screen 211, this pattern is recognized as a command for closing the active window A. Then, the operation screen on the display 103 is changed from the operation screen 211 to the operation screen 212. As a result, the window A is closed and disappears from the operation screen. At this time, its corresponding icon in the taskbar disappears accordingly. After the window A is closed, the window B, which has been positioned under the window A, becomes active, for example.

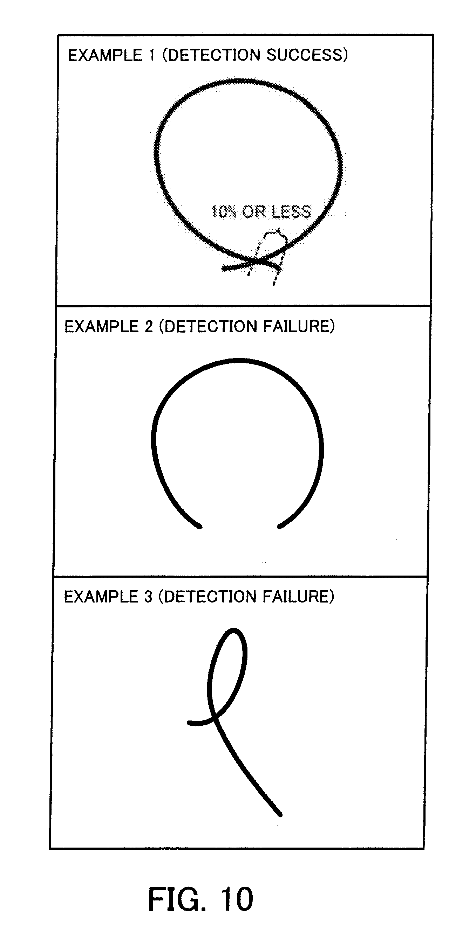

FIG. 10 illustrates the second example of pattern recognition. FIG. 10 depicts how to recognize a pattern of "○" from the track of touch operations. To recognize the pattern of "○", the pattern definition table 131 defines the following feature items B1 and B2.
(B1) One line which is crossed once between the start point (a point at which a DOWN event is detected) and the end point (a point at which an UP event is detected).
(B2) A distance between the start point and the intersection point is equal to or less than 10% of the total length of the line.

The track of touch operations in example 1 satisfies both the feature items B1 and B2. Therefore, it is recognized that a pattern of "o" has been drawn in the example 1. On the other hand, referring to the track of the touch operations in example 2, there is no intersection point between the start and end points, which does not satisfy the feature item B1. In addition, referring to the track of touch operations in example 3, a distance between the start point and the intersection point is larger than 10% of the total length of the line, which does not satisfy the feature item B2. Therefore, it is not recognized that a pattern of "o" has been drawn in the examples 2 and 3.

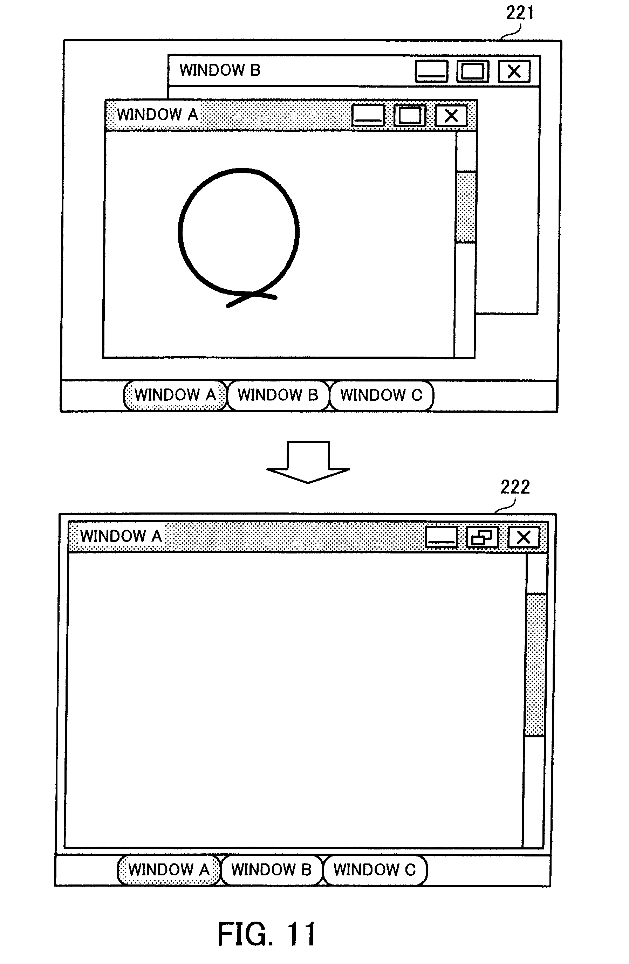

FIG. 11 illustrates a second example of window operations. The operation screens 221 and 222 of FIG. 11 are example operation screens that are displayed on the display 103. Similarly to the operation screen 211 of FIG. 9, windows A, B, and C are open in the operation screen 221. Out of these, the windows A and B are displayed in a normal state, and the window C is displayed as an icon in a taskbar. The window A is the front-most active window.

When touch operations for drawing a pattern of "o" are made on the display area of the operation screen 221, this pattern is recognized as a command for maximizing the active window A. Then, the operation screen on the display 103 is changed from the operation screen 221 to the operation screen 222. That is, the window A is displayed as large as to cover the entire display area of the display 103. After the window A is maximized, the window A remains active, for example.

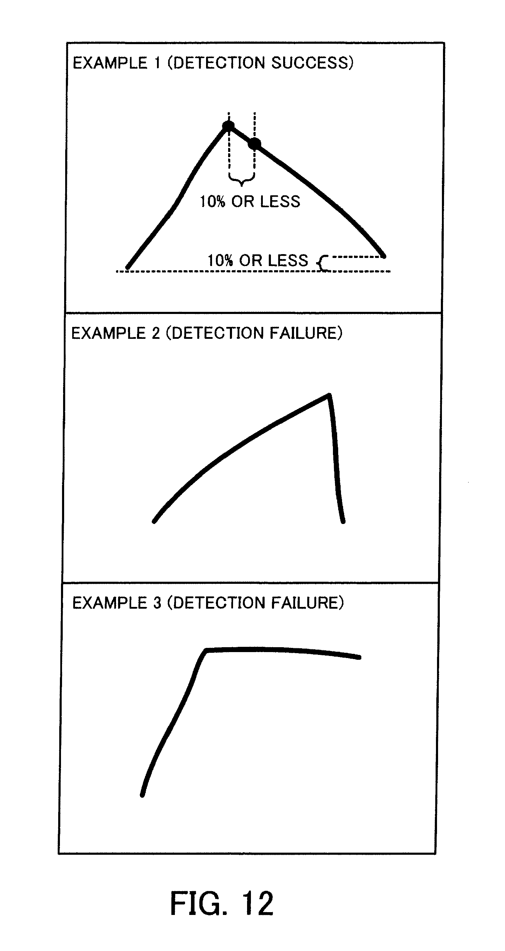

FIG. 12 illustrates the third example of pattern recognition. FIG. 12 depicts how to recognize a pattern of "^" from the track of touch operations. To recognize the pattern of "^", the pattern definition table 131 defines the following feature items C1 and C2.
(C1) A distance between the central point M and the top point P (a point with the smallest y-coordinate) of one line is equal to or less than 10% of the total length of the line. In this connection, a direction from top to down of the display area is taken as y-axis.
(C2) A difference in y-coordinate between the start and end points is equal to or less than 10% of a difference in y-coordinate between the start point and the top point P. It is acceptable which point has a smaller y-coordinate, start point or end point.

The track of touch operations in example 1 satisfies both the feature items C1 and C2. Therefore, it is recognized that a pattern of "^" has been drawn in the example 1. On the other hand, referring to the track of touch operations in example 2, a distance between the central point M and the top point P is larger than 10% of the total length of the line, which does not satisfy the feature item C1. In addition, referring to the track of the touch operation in example 3, a difference in y-coordinate between the start and end points is larger than 10% of a difference in y-coordinate between the start point and the top point P, which does not satisfy the feature item C2. Therefore, it is not recognized that a pattern of "^" has been drawn in the examples 2 and 3.

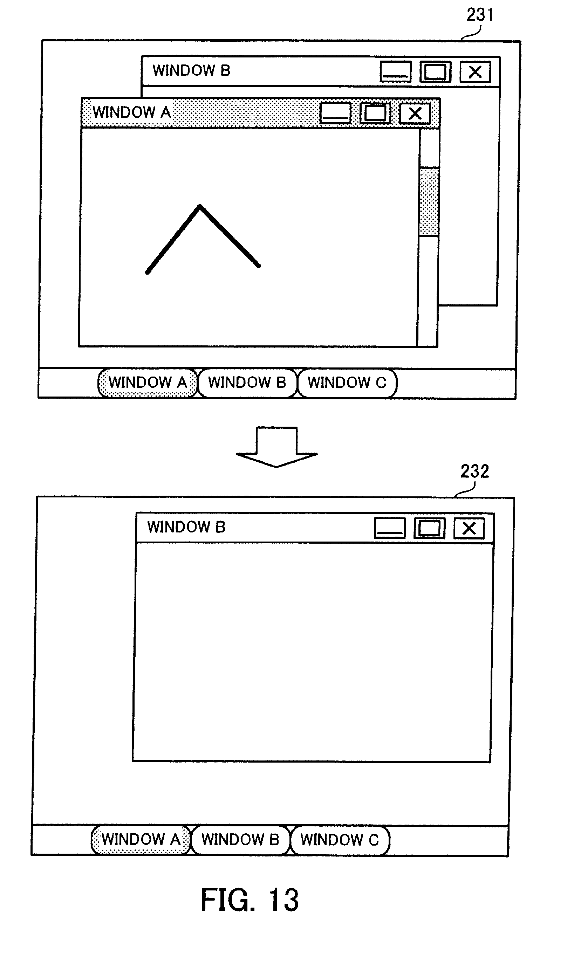

FIG. 13 illustrates a third example of window operations. The operation screens 231 and 232 of FIG. 13 are example operation screens that are displayed on the display 103. Similarly to the operation screen 211 of FIG. 9, windows A, B, and C are open in the operation screen 231. Out of these, the windows A and B are displayed in a normal state, and the window C is displayed as an icon in a taskbar. The window A is the front-most active window.

When touch operations for drawing a pattern of "^" are made on the display area of the operation screen 231, this pattern is recognized as a command for minimizing the window A. Then, the operation screen on the display 103 is changed from the operation screen 231 to the operation screen 232. That is, the window A is displayed only as an icon in the taskbar, and the window B, which has been positioned under the window A, becomes a front-most window. In this connection, when the icon of the window A is touched, the window A returns to the normal state.

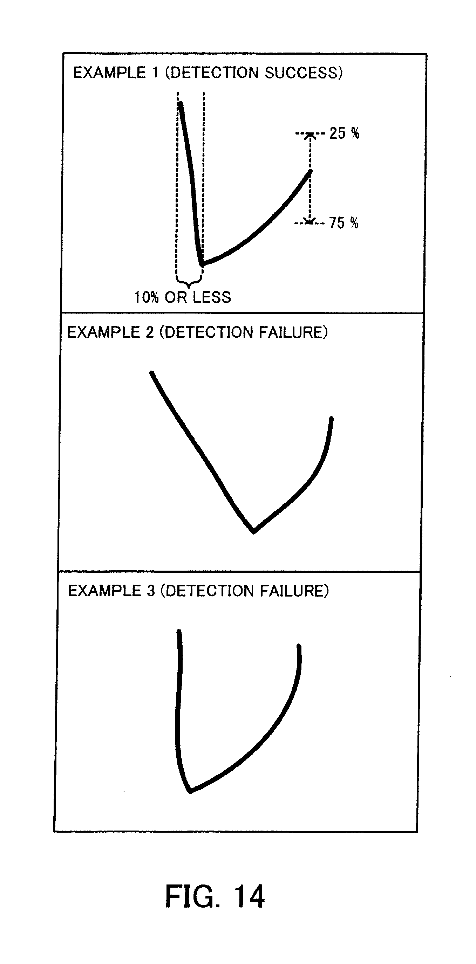

FIG. 14 illustrates the fourth example of pattern recognition. FIG. 14 depicts how to recognize a pattern of " 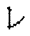 " from the track of touch operations. To recognize the pattern of " 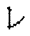 ", the pattern definition table 131 defines the following feature items D1 and D2.
(D1) A difference in x-coordinate between the lowest point Q (a point with the largest y-coordinate) and the start point of one line is equal to or less than 10% of the total length of the line. In this connection, a direction from left to right of the display area is taken as x-axis.
(D2) A y-coordinate of the end point exists between the y-coordinate of the start point and the y-coordinate of the lowest point Q, and exists within "25% of a difference in y-coordinate from the center of these points".

The track of touch operations in example 1 satisfies both the feature items D1 and D2. Therefore, in the example 1, it is recognized that a pattern of " 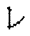 " has been drawn. On the other hand, referring to the track of touch operations in example 2, a difference in x-coordinate between the lowest point Q and the start point is larger than 10% of the total length of the line, which does not satisfy the feature item D1. In addition, referring to the track of touch operations in example 3, the y-coordinate of the end point is too small (extending too high), which does not satisfy the feature item D2. Therefore, it is not recognized that a pattern of " 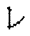 " has been drawn in the examples 2 and 3.

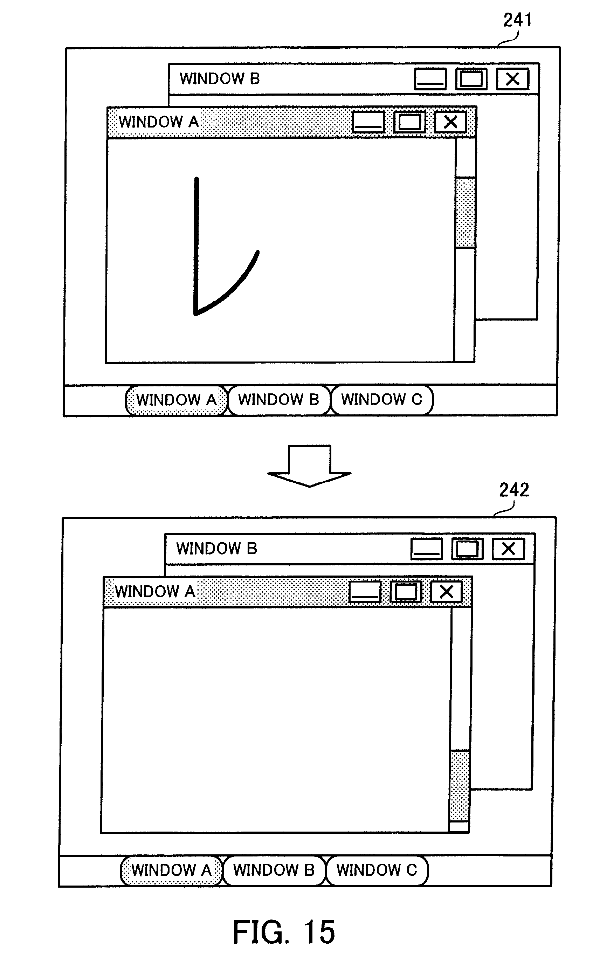

FIG. 15 illustrates a fourth example of window operations. The operation screens 241 and 242 of FIG. 15 are example operation screens that are displayed on the display 103. Similarly to the operation screen 211 of FIG. 9, windows A, B, and C are open in the operation screen 241. Out of these, the windows A and B are displayed in a normal state, and the window C is displayed as an icon in a taskbar. The window A is the front-most active window.

When touch operations for drawing " 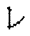 " are made on the display area of the operation screen 241, this is recognized as a command for scrolling the active window A. Then, the operation screen of the display 103 is changed from the operation screen 241 to the operation screen 242. That is, the screen of the window A is scrolled downwards, and the scrollbar on the right side moves downwards accordingly. This produces the same visual effects as operating the scrollbar. In this connection, it is also possible to scroll the screen upwards.

Four types of window operation have been described above. However, the types of window operation are not limited to these and other types of window operation may be performed. In addition, patterns which are usable as commands are not limited to those described above, and other patterns may be registered. Further, a pattern and a type of window operation may not have one-to-one correspondence, and a plurality of patterns may be registered to represent one type of window operation. In addition, a track made with the stylus pen 106 or a user's finger may be made invisible, or may be displayed on the display 103 only in a predetermined period of time.

Further, in FIG. 9, 11, 13, or 15, it is so designed that the window A is closed, maximized, or minimized when a button placed at the right end of a title bar of the window A is touched. In addition, it is so designed that the screen is scrolled when the scrollbar of the window A is dragged. A method using pattern commands and a method using buttons or scrollbars may be employed together, or any one of these may be employed. It is possible to allow the user to select a method according to his/her preference. In addition, it is possible to detect only patterns of predetermined size or larger so as to suppress malfunctions.

With such a portable information terminal device 100, a pattern drawn through touch operations is recognized, and a currently open window (for example, active window) is operated according to the pattern. Thereby, the user does not need to touch an operation image such as a button or scrollbar correctly, which realizes user-friendly window operations. That is, the operability for window operations is improved. Especially, this is beneficial for portable information terminal apparatuses.

The above display control can be realized by causing a computer to execute a predetermined program. In this case, a program is prepared, which describes processes for the functions to be performed. The program describing the required processes may be recorded on a computer-readable recording medium. Computer-readable recording media include magnetic recording devices, optical discs, magneto-optical recording media, semiconductor memories, etc. The magnetic recording devices include Hard Disk Drives (HDD), Flexible Disks (FD), magnetic tapes (MT), etc. The optical discs include DVDs (Digital Versatile Discs), DVD-RAMs, CD-ROMs (Compact Disc Read-Only Memories), CD-R (Recordable), CD-RW (ReWritable), etc. The magneto-optical recording media include MOs (Magneto-Optical disks) etc.

To distribute the program, portable recording media, such as DVDs and CD-ROMs, on which the program is recorded may be put on sale. Alternatively, the program may be stored in the storage device of a server computer and may be transferred from the server computer to other computers through a network.

A computer which is to execute the above program stores in its local storage device the program recorded on a portable recording medium or transferred from the server computer, for example. Then, the computer reads the program from the local storage device, and runs the program. The computer may run the program directly from the portable recording medium. Also, while receiving the program being transferred from the server computer, the computer may sequentially run this program.

The foregoing is considered as illustrative only of the principles of the invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

Description of Reference Numerals
- 1: Information processing apparatus
- 1a: Display unit
- 1b: Detection unit
- 1c: Control unit

## Claims

1. An information processing apparatus comprising:
a display unit to display one or more windows;
a detection unit to detect touch operations made on the display unit; and
a control unit to recognize a pattern represented by a track of the touch operations detected by the detection unit, and perform display control on the windows displayed on the display unit according to the pattern.

2. The information processing apparatus according to claim 1, wherein the control unit controls an active window out of the windows displayed on the display unit.

3. The information processing apparatus according to claim 1, wherein the display control according to the pattern includes at least one of maximizing, minimizing, closing, and scrolling of a window.

4. The information processing apparatus according to claim 1, further comprising a storage unit to store information that specifies a correspondence between features of the track of the touch operations and the pattern,
wherein the control unit recognizes the pattern with reference to the information stored in the storage unit.

5. The information processing apparatus according to claim 1, further comprising a storage unit to store information that specifies a correspondence between the pattern and contents of the display control,
wherein the control unit determines the display control to be performed, with reference to the information stored in the storage unit.

6. A display control method for an information processing apparatus with a display unit, comprising:
displaying one or more windows on the display unit;
detecting touch operations made on the display unit; and
recognizing a pattern represented by a track of the touch operations, and performing display control on the windows displayed on the display unit according to the pattern.

7. A display control program causing a computer connected to a display unit to execute:
displaying one or more windows on the display unit;
detecting touch operations made on the display unit; and
recognizing a pattern represented by a track of the touch operations, and performing display control on the windows displayed on the display unit according to the pattern.
